# EUROPEAN PATENT APPLICATION

(11) **EP 4 321 597 A1**
(43) Date of publication of application: **14.02.2024**
(21) Application number: 22190315.6
(22) Date of filing: 12.08.2022
(51) Int. Cl.: C10G 2/00, C01B 3/22, C07C 29/151

(54) **FISCHER-TROPSCH PRODUCTION OF HYDROCARBONS FROM METHANOL**

(71) Applicant: BP P.L.C., London SW1Y 4PD (GB)
(72) Inventor: PATERSON, Alexander Jamers, London, SW1Y 4PD (GB); SUNLEY, Glenn, London, SW1Y 4PD (GB)
(74) Representative: Hamer, Christopher K.

(57) **Abstract**

The present disclosure relates generally to processes for performing an integrated Fischer-Tropsch synthesis of hydrocarbons using methanol. In particular, the disclosure relates to a process comprising: providing a first feed stream comprising methanol; contacting the first feed stream with a methanol decomposition catalyst to form a first product stream comprising CO and H₂; providing a second feed stream comprising H₂ and at least a portion of the CO of the first product stream; contacting the second feed stream with a Fischer-Tropsch catalyst to provide a second product stream comprising C₅₊ hydrocarbons.

## Description

### BACKGROUND OF THE DISCLOSURE

### FIELD

The present disclosure relates to integrated processes for the Fischer-Tropsch synthesis of hydrocarbons from methanol.

### TECHNICAL BACKGROUND

The conversion of synthesis gas (i.e., a mixture of carbon monoxide and hydrogen, also known as syngas) into hydrocarbons by the Fischer-Tropsch process has been known for decades, but has historically lagged in performance compared to other hydrocarbon synthesis techniques. The growing importance of alternative energy sources has resulted in renewed interest in the Fischer-Tropsch (FT) process as it allows a direct and environmentally-acceptable route to high-quality fuels and feedstock chemicals.

FT processes are known for producing linear hydrocarbons for use in fuels, as well as oxygenates that can be useful in fuels and can also serve as valuable feedstock chemicals. The hydrocarbon fuel derived from FT processes is typically better able to meet increasingly stringent environmental regulations compared to conventional refinery-produced fuels, as FT-derived fuels typically have lower contents of sulfur, nitrogen, and aromatic compounds, which contribute to the emission of potent pollutants such as SO₂, NOx, and particulates. Products derived from FT processes often have a higher octane rating than hydrocarbons and thus burn more completely, thereby reducing the environmental impact of such a fuel. Alcohols, olefins and other oxygenates obtained may also be used as reagents in other processes, such as in the synthesis of lubricants.

Synthesis gas is conventionally produced from fossil fuel sources, primarily through the gasification of coal. However, syngas suffers from poor handling properties, as it must be transported in the low-density vapor phase, or liquefied under high pressure.

Accordingly, there exists a need to develop improved protocols for the production and handling of syngas and subsequent use of syngas in Fischer-Tropsch synthesis reactions.

### SUMMARY

The inventors have identified processes to efficiently convert methanol to hydrocarbons through the production of syngas from methanol decomposition. Advantageously, this process can proceed at lower temperature as compared to conventional synthetic routes, and does not require a reverse water-gas shift (rWGS) process.

Thus, in one aspect, the present disclosure provides a process for performing an integrated Fischer-Tropsch synthesis, the method comprising:
providing a first feed stream comprising methanol;
contacting the first feed stream with a methanol decomposition catalyst (e.g., in a methanol decomposition reaction zone) to decompose at least a portion of the methanol to form a first product stream comprising CO and H₂;
providing a second feed stream comprising H₂ and at least a portion of the CO of the first product stream;
contacting the second feed stream with a Fischer-Tropsch catalyst to perform a Fischer-Tropsch synthesis to provide a second product stream comprising C₅₊ hydrocarbons.

Other aspects of the disclosure will be apparent to those skilled in the art in view of the description that follows.

### BRIEF DESCRIPTION OF THE DRAWINGS

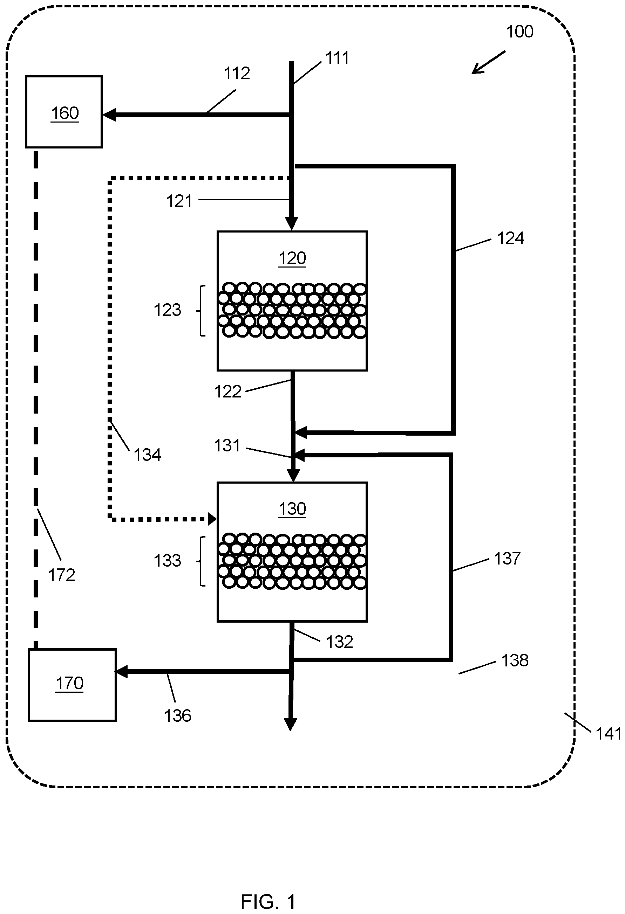

FIGS. 1-4 provide process schematics according to example embodiments of the disclosure.

### DETAILED DESCRIPTION

The present disclosure relates to techniques for preparing hydrocarbons from methanol. Fischer-Tropsch production of hydrocarbons from syngas is well-known in the art. However, syngas (a mixture of H₂ and CO) can be difficult to store and transport at efficient densities. Additionally, environmentally friendly modes of CO production, such as from carbon dioxide through the reverse water-gas shift reaction, require high operating temperatures. In contrast, methanol is a common and inexpensive commodity chemical which may be produced from numerous sources, including fermentation, biomass pyrolysis, catalytic reaction of syngas, and CO₂ hydrogenation. Methanol, being a liquid at ambient temperatures and pressures, may optionally be transported through low-pressure pipelines, ships or trucks, and thus generally allows for increased transportation efficiency as a liquid. Methanol may then be subjected to a methanol decomposition step in order to generate H₂ and CO in a 2:1 ratio. At least the CO of the methanol decomposition product can then be utilized in a Fischer-Tropsch synthesis reaction in order to generate hydrocarbons; the H₂ from the methanol decomposition is desirably also used in the Fischer-Tropsch synthesis. For example, some Fischer-Tropsch processes operate at a H₂:CO ratio of 2:1 or greater, such at 2.2:1 or 3:1. In such cases, the H₂ and CO mixture from methanol decomposition may be supplemented by a hydrogen source, such as from a recycle stream or green hydrogen produced with renewable energy, to form the Fischer-Tropsch reaction mixture.

Accordingly, in one aspect, the present disclosure provides a process for performing an integrated Fischer-Tropsch synthesis, the method comprising:
providing a first feed stream methanol;
contacting the first feed stream with a methanol decomposition catalyst (e.g., in a methanol decomposition reaction zone) to decompose at least a portion the methanol to form a first product stream comprising CO and H₂;
providing a second feed stream comprising H₂ and at least a portion of the CO of the first product stream;
contacting the second feed stream with a Fischer-Tropsch catalyst to perform a Fischer-Tropsch synthesis to provide a second product stream comprising C₅₊ hydrocarbons.

As used herein, a "feed stream" is used to mean the total material input to a process step, e.g., methanol decomposition or Fischer-Tropsch reaction, regardless of whether provided in a single physical stream or multiple physical streams, and whether through a single inlet or multiple inlets. Similarly, a "product stream" is used to mean the total material output from a process step, e.g., methanol decomposition or Fischer-Tropsch reaction, regardless of whether provided in a single physical stream or multiple physical streams, and whether through a single reactor outlet or multiple reactor outlets.

Methanol is a hygroscopic compound which is highly miscible with water. Accordingly, many commercial methanol sources and methods of methanol preparation can contain significant amounts of water, or may acquire a significant water content during storage or transport. In some embodiments, entrained water can be deleterious to subsequent processes. For example, excess water present in the methanol decomposition process step can undesirably cause CO to be converted back to CO₂ through the water-gas shift reaction. Additionally, adventitious water may react with methanol in a methanol steam reforming reaction to form CO₂ and hydrogen, undermining process efficiency. Accordingly, in various embodiments as otherwise described herein, the process further comprises separating at least a portion of water from the first feed stream. For example, in particular embodiments, the process further comprises separating at least 50%, or at least 75%, or at least 90%, or at least 95%, or at least 99%, or at least 99.5% of the water in the first feed stream. In various embodiments as otherwise described herein, the first feed stream has a water content of no more than 10 mol%, e.g., no more than 2 mol%, or no more than 1 mol%, or no more than 0.5 mol%.

In embodiments in which water is separated from the first feed stream, the water may be disposed of as waste, or recycled into other processes. For example, in various embodiments, the separated water is directed to an electrolysis reactor for the formation of H₂ gas, e.g., for use in this integrated process or in other processes. In certain embodiments, the separated water is subjected to a purification step before introduction into the electrolysis reactor.

The first feed stream introduces methanol to for decomposition into CO and H₂. Methanol decomposition is adistinct process from methanol reforming. In methanol reforming, methanol and water are reacted to produce CO₂ and H₂. Accordingly, in various embodiments as otherwise described herein, methanol reforming is not utilized. For example, in particular embodiments, no more than 10% of the H₂ is derived from methanol reforming (e.g., no more than 5%, or no more than 1%).

The water-gas shift reaction is another method to generate H₂ by reacting carbon monoxide with water. The reaction is reversible as well, where carbon dioxide may be reacted with hydrogen to form carbon monoxide and water. Both of these reactions are conventionally used in the art. Advantageously, the presently disclosed process avoids the use of both the water-gas shift reaction and reverse water-gas shift reaction. Accordingly, in various embodiments as otherwise described herein, less than 10% (e.g., less than 5%, or less than 2%) of each of the H₂, CO, and CO₂ of the process are generated by the water-gas shift reaction or reverse water-gas shift reaction, as appropriate. In various processes as disclosed herein, there is no use of a dedicated water-gas shift reactor or reverse water-gas shift reactor (however, as would be appreciated by the person of ordinary skill in the art, the water-gas shift reaction or reverse water-gas shift reaction can operate to a minor degree as a side reaction during certain processes).

As described herein, methanol decomposition is utilized to form a product stream that includes CO and H₂. Accordingly, in various embodiments as otherwise described herein, the first feed stream comprises at least 5 mol% methanol. For example, in particular embodiments, the first feed stream comprises at least 7.5% methanol, e.g., at least 10% methanol, or at least 15% methanol, or at least 20% methanol, or at least 25 mol% methanol.

Optionally, the first feed stream may also comprise one or more additional gases, which may be inert or reactive. In such embodiments, the first feed stream may further comprise one or more of H₂, CO, CH₄, CO₂, and N₂. In particular embodiments, the first feed stream comprises an inert carrier gas, wherein the inert carrier gas includes one or more of CH₄, CO₂ and N₂. Additionally or alternatively, H₂ and/or CO may be added to the first feed stream in order to tune the decomposition reaction and/or provide a desired first product stream for use in the Fischer-Tropsch process. In such embodiments, the firstfeed stream further comprises H₂ and/or CO. In various embodiments as otherwise described herein, one or more of H₂, CO, CH₄, CO₂, and N₂ are be present in first feed stream an amount in the range of up to 50 mol%, e.g., up to 40 mol%, or up to 30 mol%.

In various embodiments, the first feed stream has a low water content. Any water present can react with CO to be at least partially converted to CO₂ and H₂ through the water-gas shift reaction, and water can also react with methanol via reforming to provide H₂ and CO₂. The generated H₂, according to the reaction equilibrium of methanol decomposition, would then disfavor the decomposition of methanol to CO and H₂. Accordingly, in various embodiments as otherwise described herein, the first feed stream has a concentration of water of no more than 5 mol%, e.g., no more than 2 mol%, or no more than 1 mol %, or no more than 0.5 mol%, or no more than 0.3 mol%, or no more than 0.2 mol%, or no more than 0.1 mol%.

The first feed stream may be provided at elevated temperature. For example, in various embodiments as otherwise described herein, the first feed stream has a temperature in the range of 200-500 °C, e.g., 200-450 °C, or 200-400 °C, or 200-350 °C, or 200-300 °C, or 250-500 °C, or 250-450 °C, or 250-400 °C, or 250-300 °C, or 300-500 °C, or 300-450 °C, or 300-400 °C.

The first feed stream is contacted with a methanol decomposition catalyst. Any suitable decomposition catalyst may be used; a variety are known in the art. For example, the decomposition catalyst may include a transition metal, for example, Ni, Co, Rh, Ir, Cu, Pt, Ru, or mixtures thereof. The decomposition catalyst may be a supported catalyst, wherein the support is a refractory oxide, such as oxidized diamond, silica, zirconia, ceria, titania, alumina, or magnesia. In some embodiments, the methanol decomposition catalyst is a copper/zinc oxide catalyst, e.g., on alumina.

The contacting of the firstfeed stream with the methanol decomposition catalyst occurs at a temperature suitable to effect efficient methanol decomposition. In various embodiments as otherwise described herein, the contacting of the first feed stream with the methanol decomposition catalyst is performed at a temperature in the range of 200-500 °C, e.g., 200-450 °C, or 200-400°C, or 200-350 °C, or 200-300°C, or 250-500 °C, or 250-450 °C, or 250-400 °C, or 250-300 °C, or 300-500 °C, or 300-450 °C, or 300-400 °C. The contacting may be performed at a variety of suitable pressures, for example, in the range of 0 to 50 barg. In various embodiments as otherwise described herein, the contacting with the methanol decomposition catalyst may be integrated with a Fischer-Tropsch reactor. Accordingly, in such embodiments, the contacting with the methanol decomposition catalyst may be performed at relatively high pressures, for example, in the range of up to 50 barg, e.g., 20 to 40 barg.

The methanol decomposition reaction generates CO and H₂, ideally with minimal other products. Accordingly, in various embodiments as otherwise described herein, the decomposition of methanol is performed with a carbon product selectivity of at least 50% for CO, e.g., at least 60%, or at least 70%, or at least 80%, or at least 90% for CO. Advantageously, in various embodiments, the decomposition of methanol is performed with a selectivity of no more than 20% for CO₂, e.g., no more than 15%, or no more than 10%, or no more than 5%. In various embodiments as otherwise described herein, the decomposition of methanol is performed with a conversion of methanol of at least 30%, e.g., at least 40%, or at least 50%, or at least 60%, or at least 65%, or at least 70%, or at least 75%.

As described herein, the decomposition of methanol generates CO and H₂. Accordingly, in various embodiments as otherwise described herein, the first product stream comprises at least 20 mol% total of CO and H₂, e.g., at least 35 mol%, or at least 50 mol%, or at least 65 mol%. Without wishing to be bound by theory, methanol decomposition under these conditions is expected to generated two moles of H₂ per mole of CO. Accordingly, in various embodiments as otherwise described herein, the first product stream has a molar ratio of hydrogen to carbon monoxide in the range of 0.5:1 to 5:1, e.g., 1:1 to 3:1, or 1.5:1 to 2.5:1, or 1.5:1 to 3.5:1. Of course, in other embodiments, this molar ratio may be different, e.g., as a consequence of inclusion of H₂ or CO in the first feed stream.

Advantageously, a proportion of methanol is consumed during the methanol decomposition reaction. Accordingly, in various embodiments as otherwise described herein, the first product stream includes no more than 75 mol% methanol, e.g., no more than 60 mol% methanol, no more than 50 mol% methanol, or no more than 25 mol% methanol.

In some embodiments, further removal of methanol from the first product stream is desired. For example, in various embodiments as otherwise described herein, the process further comprises separating at least a portion of methanol from the first product stream, e.g., separating at least 50%, or at least 75%, or at least 90%, or at least 95% of the methanol from the first product stream. Advantageously, methanol of the first product stream, e.g., at least a portion of the methanol separated from the first product stream, may be transferred or recycled to other processes. For example, in various embodiments as otherwise described herein, the process further comprises recycling to the firstfeed stream at least a portion of the methanol separated from the first product stream.

The person of ordinary skill in the art will be familiar with catalytic methods for the decomposition of methanol to CO and H₂. Various examples of catalysts and catalytic processes are described in U.S. Patent no. 6,541,142, U.S. Patent no, 9,883,773, and U.S. Patent no. 4,716,859 each of which is hereby incorporated herein by reference in its entirety.

As described herein, the methanol decomposition reaction produces CO and H₂ in a theoretical 2:1 molar ratio, although the actual reaction output may vary. This can result in excess hydrogen for subsequent processes, depending on the desired ratio. And, notably, hydrogen may be present in the first feed stream, further increasing the ratio in the first product stream. Accordingly, in various embodiments as otherwise described herein, the process further comprises separating at least a portion of H₂ from the first product stream. The separated H₂ may be suitable for a variety of processes. Additionally or alternatively, in various embodiments as otherwise described herein, the process further comprises activating the methanol decomposition catalyst or the Fischer-Tropsch catalyst using at least a portion of the H₂ separated from the first product stream.

As described herein, the second feed stream comprises at least a portion of the CO of the first product stream. Accordingly, in various embodiments as otherwise described herein, at least 50% of the CO of the first product stream is provided to the second feed stream. For example, in particular embodiments, at least 75% of the CO of the first product stream is provided to the second feed stream, e.g., at least 90%, or at least 95%, or at least 99%. In various embodiments, substantially all of the CO of the first product stream is provided to the second feed stream. Additionally or alternatively, in various embodiments as otherwise described herein, the CO of the second feed stream may be supplied in part from a CO source other than the first product stream.

As noted above, the second feed stream comprises H₂ and CO, and the first product stream includes H₂. In various embodiments as otherwise described herein, at least a portion of the H₂ of the first product stream is provided to the second feed stream. For example, in particular embodiments, at least 50% of H₂ of the first product stream is provided to the second feed stream, e.g., at least 75%, or at least 90%, or at least 95%, or at least 99%. In various embodiments, substantially all of the H₂ of the first product stream is provided to the second feed stream. Additionally or alternatively, in various embodiments as otherwise described herein, the H₂ of the second feed stream may be supplied at least in part from a hydrogen source other than the first product stream.

In various embodiments as otherwise described herein, the second feed stream may include other gases, for example, CO₂, CH₄, or N₂. Other gases, in embodiments where they are included, may be contained in the first product stream and carried through to the second feed stream. But in other embodiments, one or more other gases (e.g., one or more of CO₂, CH₄, N₂) is provided to the second feed stream from a source thereof other than the first product stream.

Advantageously, the portion of the first product stream that is included in the second feed stream may be tuned as desired for the processes of the second feed stream. For example, in various embodiments as otherwise described herein, the portion of the first product stream that is included in the second feed stream has a H₂:CO ratio in the range of 0.5:1 to 5:1, e.g., in the range of 1:1 to 2.5:1.

As otherwise described herein, the second feed steam is contacted with a Fischer-Tropsch catalyst. Accordingly, in various embodiments as otherwise described herein, the second feed steam has a molar H₂:CO appropriate for Fischer-Tropsch synthesis. For example, in various embodiments, the second feed stream has a molar H₂:CO ratio in the range of 0.5:1 to 5:1, e.g., in the range of 1:1 to 2.5:1. In particular embodiments, the second feed stream has a molar H₂:CO ratio of at least 1.2:1. For example, in various embodiments the second feed stream may have a molar H₂:CO ratio in the range of 1.2:1 to 2.5:1, or in the range of 1.4:1 to 2.5:1, or in the range of 1.6:1 to 2.2:1.

The Fischer-Tropsch catalyst may be selected by the person of ordinary skill in the art. In various embodiments as otherwise described herein, the Fischer-Tropsch catalyst comprises cobalt, iron, rhodium, ruthenium, or acombination thereof (e.g., comprises cobalt or iron). In particular embodiments, the Fischer-Tropsch catalyst comprises cobalt in an amount in the range of 2 to 30 wt%, e.g., in the range of 5 to 25 wt%, or in the range of 8 to 20 wt%, calculated as Co(0). In particular embodiments, the Fischer-Tropsch catalyst comprises iron in an amount in the range of 15 to 95 wt%, e.g., 25 to 95 wt%, or 30 to 90 wt%, calculated as Fe(0). In various embodiments as otherwise described herein, the Fischer-Tropsch catalyst further comprises manganese (e.g., comprises manganese in the amount of 0.1 to 15 wt%, or 1 to 10 wt%).

In various embodiments as otherwise described herein, the Fischer-Tropsch catalyst is a supported catalyst, wherein the support comprises at least one of titanium oxide, zirconium oxide, cerium oxide, aluminum oxide, silicon oxide, magnesium oxide, and zinc oxide (e.g., comprises at least one of titanium oxide, aluminum oxide, and silicon oxide). For example, in particular embodiments, the support is a titanium dioxide support, or is an alumina support, or is a silica support. In various embodiments, the support is a shaped particle, e.g., an extrudate. The catalyst can be prepared using methods conventional in the art.

Prior to use, certain catalysts require activation. In various embodiments as otherwise described herein, the Fischer-Tropsch catalyst is activated in a reductive atmosphere. In various embodiments, the catalyst is substantially reduced to generate a reduced catalyst material that is used in the catalysis of the Fischer-Tropsch reaction. In embodiments wherein the Fischer-Tropsch catalyst comprises cobalt, this process results in at least portion of the cobalt being transformed into cobalt metal. Desirably, the reduction results in at least 50% of the cobalt being provided as cobalt(0). The person of ordinary skill in the art can use conventional methods to reduce cobalt catalyst materials (e.g., cobalt oxide- or cobalt hydroxide-based materials) to metallic form. In various embodiments as otherwise described herein, the first reducing agent is hydrogen gas, H₂. The hydrogen gas may be mixed with other gases, such as an inert carrier gas. Examples of such inert carrier gasses include nitrogen, carbon dioxide, argon, or helium. The hydrogen gas may also be mixed with carbon monoxide, with or without one or more additional carrier gasses. In various embodiments, the reduction is effected by contacting the first catalyst material with a first reducing gas, wherein the first reducing gas comprises the first reducing agent, wherein the first reducing gas comprises at least 50 vol% H₂ (e.g., at least 60 vol%, or at least 70 vol%, or at least 80 vol%, or at least 90 vol%, or at least 95 vol%, or essentially 100 vol% H₂). As noted above, H₂ for reduction can come from the first product stream. H₂ can also be separated and recycled from the second product stream for use in reducing the Fischer-Tropsch catalyst.

The temperature of the Fischer-Tropsch synthesis can suitably be in the range of 200-400 °C, such as 200-300 °C, or 210-400°C, or 210-300 °C, or 220-400 °C, or 220-300 °C. In various embodiments as otherwise described herein, the temperature of the Fischer-Tropsch synthesis is in the range of 200-250 °C, e.g., or 200-240 °C, or 200-230 °C, or 200-220 °C, or 210-250 °C, or 210-240 °C, or 210-230 °C, or 220-250 °C, or 220-240 °C, or 230-250 °C. The pressure of the reaction may suitably be in the range from 10-50 barg e.g., 20-50 barg, or 25-50 barg, or 10-40 barg, or 20-40 barg, or 25-40 barg or 10-35 barg, or 20-35 barg, or 25-35 barg. In particular embodiments, the contacting of the second feed stream with the Fischer-Tropsch catalyst is performed at a pressure in the range of 20-40 barg.

Subject to the limitations described herein, the person of ordinary skill in the art can adapt conventional Fischer-Tropsch catalysts and processes to arrive at the processes of the disclosure. Suitable techniques for catalyst preparation and hydrocarbon synthesis, especially with regard to the synthesis of C₅₊ hydrocarbons and/or oxygenates, are well-known in the art, for example, described in International Patent Application Publication No. 2019/154885, which is hereby incorporated by reference herein in its entirety.

Advantageously, in various embodiments as otherwise described herein, the contacting of the second feed stream with the Fischer-Tropsch catalyst and the contacting of the first feed stream with the methanol decomposition catalyst may be performed in the same plant. This can be, e.g., within different beds in the same reactor, or in different reactors. In such embodiments, the two processes may be integrated together to provide efficient transformation of methanol to hydrocarbons.

The Fischer-Tropsch process is typically used to make C₅₊ hydrocarbons, for example, unsubstituted C₅₊ hydrocarbons (e.g., alkanes and alkenes) and oxygenated C5₊ hydrocarbons (e.g., C₅₊ alcohols, aldehydes, ketones, carboxylic acids). The Fischer-Tropsch reaction as described herein is desirably operated with a high selectivity for hydrocarbons. For example, in various embodiments as otherwise described herein, the contacting of the Fischer-Tropsch catalyst with the second feed stream is performed with a C₅₊ selectivity of at least 30%, e.g., at least 50%, or at least 70%. The hydrocarbon composition of the second product stream can vary depending on identify of catalyst and process conditions as known in the art. In various embodiments, the hydrocarbon composition comprises hydrocarbons (e.g., linear hydrocarbons, branched hydrocarbons, saturated or unsaturated hydrocarbons) and oxygenated derivatives thereof. In various embodiments as otherwise described herein, the hydrocarbon composition comprises at least one of alkanes, alkenes, and alcohols.

In general, longer-chain hydrocarbons are more desirable compared to shorter-chain hydrocarbons. Accordingly, in various embodiments as otherwise described herein, the second product stream comprises C₁-C₄ hydrocarbons, and the process further comprises separating at least a portion of the C₁-C₄ hydrocarbons from the second product stream to provide a light hydrocarbon stream. In particular embodiments, the process further comprises oxidizing at least a portion of the light hydrocarbon stream in a partial oxidation reactor to provide a pOX stream comprising CO and/or CO₂, and including at least a portion of the pOX stream in the second feed stream. For example, catalytic partial oxidation of hydrocarbon feedstocks is described in European Patent Application Publication no. 0303438 A1, which is hereby incorporated herein by reference in its entirety. Additionally or alternatively, in particular embodiments, at least a portion of the light hydrocarbon stream may be directed to a steam reforming unit and/or an autothermal reforming unit, such as an electrically heated steam reforming unit. The resulting hydrogen and/or carbon oxides may then be included, at least in part, in the second feed stream as otherwise described herein.

The light hydrocarbon stream comprises numerous components, including short-chain (e.g., C₁-C₄) saturated hydrocarbons, short-chain olefins, and short-chain oxygenates. In particular, olefins (e.g., ethene, propene, butene) and alcohols, may also be recycled to the Fischer-Tropsch reactor in order to generate additional C₅₊ hydrocarbons. Accordingly, in various embodiments as otherwise described herein, the process further comprises including at least a portion of the light hydrocarbon stream in the second feed stream. Additionally or alternatively, at least a portion of the light hydrocarbon stream can be included in the first feed stream, to be passed through to the second feed stream.

In various embodiments, the second product stream may comprise unreacted H₂. In various embodiments as otherwise described herein, the process further comprises separating at least a portion of H₂ of the second product stream. The separated H₂ may then be directed to a process in need thereof. For example, in particular embodiments, at least a portion of the H₂ separated from the second product stream is provided to the second feed stream. And as mentioned above, at least a portion of H₂ separated from the second product stream can be used to activate the Fischer-Tropsch catalyst.

In various embodiments, the second product stream may comprise unreacted CO. In various embodiments as otherwise described herein, the process further comprises separating at least a portion of CO of the second product stream. The separated CO may then be directed to a process in need thereof. For example, in particular embodiments, at least a portion of the CO separated from the second product stream is provided to the second feed stream.

In various embodiments, the second product stream may comprise CO₂. Accordingly, in various embodiments as otherwise described herein, the process further comprises separating at least a portion of CO₂ from the second product stream. The separated CO₂ may then be directed to a process in need thereof.

It can be desirable to provide from the second product stream a C₅₊ hydrocarbon product stream, i.e., that contains at least 70 wt% C₅₊ hydrocarbons, e.g., at least 80 wt% C₅₊ hydrocarbons, or at least 85 wt% C₅₊ hydrocarbons. As the person of ordinary skill in the art will appreciate, this can be performed by separating out at least a portion of other components, such as C₁-C₄ hydrocarbons, CO, CO₂ and H₂, e.g., as described above.

Moreover, it can be desirable in some cases to perform further transformations on the C₅₊ hydrocarbon product stream. Hydroprocessing, i.e., contacting the C₅₊ hydrocarbon product stream with hydrogen and a hydroprocessing catalyst, can be used for this purpose. Accordingly, in various embodiments, a process as otherwise described herein includes hydroprocessing the C₅₊ hydrocarbon product stream by contacting the C₅₊ hydrocarbon product stream with hydrogen and a hydroprocessing catalyst. A variety of hydroprocessing process steps may be used. For example hydrocracking can be used to provide products with lower molecular weight, e.g., to convert higher molecular weight waxes to lower molecular weight products for use as fuels such as aviation fuel, diesel fuel or gasoline. Hydrodeoxygenation can be used to convert oxygenates to non-oxygenated hydrocarbons. Hydroprocessing can also be used to convert olefins to alkanes. Hydroisomerization may be used to alter the mix of hydrocarbon isomers. At least a portion of the H₂ used in the hydroprocessing can be H₂ separated from one or both of the first and second product streams as described above.

As the person of ordinary skill in the art will appreciate, the Fischer-Tropsch processes described herein can be used to provide a variety of end products. For example, in various embodiments as otherwise described herein, one or more products are provided from at least a portion of C₅₊ hydrocarbons of the second product stream. The one or more products can be, for example, one or more of a fuel (e.g., a diesel fuel, agasoline, or an aviation fuel), a wax or an oil (e.g., for use in lubrication or metalworking).

The processes described herein can be performed with high throughputs. For example, in various embodiments as otherwise described herein, the CO₂ hydrogenation, MeOH decomposition, and/or Fischer-Tropsch synthesis is conducted at a GHSV in the range of 2000 hr⁻¹ to 20,000 hr⁻¹. For example, in various such embodiments the contacting is conducted at a GHSV in the range of 4000 hr⁻¹ to 18,000 hr⁻¹, or 6000 hr⁻¹ to 16,000 hr⁻¹, or 8000 hr⁻¹ to 12,000 hr⁻¹, or 2000 hr⁻¹ to 12,000 hr⁻¹, or 4000 hr⁻¹ to 10,000 hr⁻¹, or 6000 hr⁻¹ to 10,000 hr⁻¹, or 2000 hr⁻¹ to 8,000 hr⁻¹, or 4000 hr⁻¹ to 8,000 hr⁻¹, or 2000 hr⁻¹ to 6000 hr⁻¹. Of course, depending on the system, higher and lower space velocities may also be used.

Hydrogen gas may be added to the second feed stream in order to increase the H₂:CO ratio. Conventional H₂ gas is most commonly derived from natural gas, often through steam reforming of methane, hydrocarbon partial oxidation, and/or coal gasification. However, each of these methods, as conventionally performed, release significant amounts of CO₂ into the atmosphere and rely on fossil fuels as a starting material and/or energy source. In contrast, other sources of H₂ are known which are preferable from an environmental standpoint. Accordingly, in various embodiments as otherwise described herein, at least a portion of the H₂ of the first feed stream and/or the second feed stream (e.g., at least 50%, at least 75%, at least 90% or at least 95%) is from a renewable resource.

As known in the art, hydrogen can be provided with color-based names according to its source of production. Examples of types of hydrogen include green hydrogen, blue hydrogen, grey hydrogen, black hydrogen, brown hydrogen, pink hydrogen, turquoise hydrogen, yellow hydrogen, and/or white hydrogen.

One potential source of green hydrogen is through the electrolysis of water. Numerous methods of electrolysis are known in the art. For example, electrolysis may be performed on pure water to produce hydrogen gas and oxygen gas, or on other solutions, such as saline solution, to produce hydrogen gas and another product (e.g., chlorine gas). In particular embodiments, the hydrogen is formed through the electrolysis of a saline solution. Water electrolysis is described further in U.S. Patent No. 4,312,720, U.S. Patent No. 4,021,323, and U.S. Patent No. 4,094,751, each of which is incorporated by reference in their entirety.

To qualify as green hydrogen, the electrical power used for the water electrolysis must be from a renewable source, that is, a source that does not depend on fossil fuel combustion. Example sources of renewable power include solar power through photovoltaic capture or solar thermal technology, wind power, geothermal energy capture, hydroelectric energy, or other renewable sources. Hydrogen that uses solar power for water electrolysis is sometimes called yellow hydrogen. Appropriate renewable energy sources are known to those of skill in the art, and may optionally be selected through certification by an appropriate agency. Accordingly, in various embodiments as otherwise described herein, at least a portion of the H₂ of the second feed stream is green hydrogen and/oryellow hydrogen. For example, in particular embodiments, the process further comprises providing at least a portion of the H₂ the second feed stream by electrolysis of water. In various embodiments, the electrolysis of water is performed using electricity at least partially derived from a renewable source.

Certain recycle streams may also be adapted to provide power for water electrolysis as appropriate. For example, in various embodiments as otherwise described herein, the electrolysis of water is performed using electricity at least partially generated from steam made by combustion of a light hydrocarbon stream provided at least partially from the second product stream.

Water electrolysis conventionally produces both H₂ and O₂ gas. As otherwise described herein, in some embodiments, the process further comprises oxidizing at least a portion of the light hydrocarbon stream (e.g., derived from the second product stream) to provide a pOX stream. In such embodiments, the oxidation may be performed using O₂. Accordingly, in particular embodiments, at least a portion of the O₂ generated by water electrolysis is provided to the partial oxidation reactor.

Blue hydrogen is defined as hydrogen gas produced with some reliance on fossil fuels, but in a process that is overall carbon neutral (i.e., does not result in any net introduction of carbon dioxide into the atmosphere). In various embodiments as otherwise described herein, the hydrogen utilized in the processes as otherwise described herein comprises blue hydrogen. An example of blue hydrogen is hydrogen gas produced from fossil fuel-derived hydrocarbons such as methane gas, wherein the resulting carbon product is captured or otherwise utilized. For example, steam reforming of methane may be conducted to produce three moles of hydrogen gas and one mole of carbon monoxide for each mole of methane. Methane steam reforming is highly endothermic, requiring significant energy input. Of course, the energy required to perform these processes must be sources from renewable sources, or sources with adequate carbon capture technology. Accordingly, in various embodiments as otherwise described herein, at least a portion of the hydrogen (e.g., at least 50%, at least 75%, at least 90% or at least 95%) is formed through the steam reforming of methane. Steam reforming of methane to produce hydrogen is discussed in International Patent Application Publication no. 2004/022480, which is herein incorporated by reference in its entirety. Accordingly, in various embodiments as otherwise described herein, at least a portion of the H₂ of the second feed stream is blue hydrogen.

Grey hydrogen is the source of most conventional H₂. Grey hydrogen is created from natural gas/methane through steam reforming, but, in contrast to blue hydrogen, none of the resulting greenhouse gases (e.g., CO₂) is captured. In various embodiments as otherwise described herein, at least a portion of the H₂ of the second feed stream is grey hydrogen.

Black hydrogen and brown hydrogen are produced from black coal or brown coal, respectively, often through gasification thereof without any carbon capture. In various embodiments as otherwise described herein, at least a portion of the H₂ of the second feed stream is black hydrogen and/or brown hydrogen.

Pink hydrogen is generated through water electrolysis where the required energy for the electrolysis is generated by nuclear power. In various embodiments as otherwise described herein, at least a portion of the H₂ of the second feed stream is pink hydrogen. Pink hydrogen is also known as purple hydrogen or red hydrogen.

Turquoise hydrogen is generated by methane pyrolysis, where the byproducts are hydrogen gas and solid elemental carbon. In various embodiments as otherwise described herein, at least a portion of the H₂ of the second feed stream is turquoise hydrogen.

White hydrogen is naturally-occurring hydrogen which can be released through tracking. In various embodiments as otherwise described herein, at least a portion of the H₂ of the second feed stream is white hydrogen.

As described herein, the disclosed process, in various embodiments, includes three central reactions: the hydrogenation of CO₂, methanol decomposition, and Fischer-Tropsch synthesis. As described herein, these reactions may be advantageously carried out in different spatial arrangements relative to each other. As known in the art, reaction zones are comprised of one or more catalyst beds, and one or more reaction zones may be within the same plant. Different plants are typically geographically separated so that feedstocks cannot be transferred between them without an intervening transportation and storage step. Accordingly, in various embodiments as otherwise described herein, the first reaction zone comprises a first reactor in which the methanol decomposition catalyst is disposed, and wherein the second reaction zone comprises a second reactor in which the Fischer-Tropsch catalyst is disposed. In various embodiments as otherwise described herein, the first reaction zone comprises a first catalyst bed in which the methanol decomposition catalyst is disposed, and the second reaction zone comprises a second catalyst bed in which the Fischer-Tropsch catalyst is disposed. For example, in particular embodiments, the first catalyst bed and the second catalyst bed are disposed within the same reactor, e.g., in catalyst stacks or catalyst bed sections.

In certain embodiments, similar catalysts may be employed for some reactions. For example, in some embodiments, the methanol decomposition catalyst and the Fischer-Tropsch synthesis catalyst have the same composition. In particular embodiments, the methanol decomposition catalyst and the Fischer-Tropsch synthesis catalyst are the same catalyst.

An example embodiment is shown in schematic view in FIG. 1, which depicts a process 100 that is contained within a single plant 141.

In the embodiment of FIG. 1, the crude methanol stream 111 is subjected to an optional water removal step whereby water is directed to electrolysis reactor 160 via dehydration stream 112. First feed stream 121 is conducted to the methanol decomposition reaction zone 120 (here, a methanol decomposition reactor), in which it is contacted with methanol decomposition catalyst 123 to decompose at least a portion of the methanol to form a first product stream 122 comprising CO and H₂. The first feed stream 121 may also be augmented through the introduction of other gases, such as CO and/or H₂ through an augmenting feed (not shown). In the embodiment of FIG. 1, from the first reaction zone 120, first product stream 122 is conducted to second feed stream 131. Second feed stream 131 comprises H₂ (e.g., from first product stream) and at least a portion of the CO of the first product stream. The second feed stream 131 may also be augmented through the introduction of other gases, such as CO and/or H₂ through an augmenting feed (not shown). Second feed stream 131 is conducted to a Fischer-Tropsch reaction zone 130 (here, a Fischer-Tropsch reactor) in which Fischer-Tropsch catalyst 133 is disposed. The second feed stream 131 is contacted with the Fischer-Tropsch catalyst 133 to provide a second product stream 132 that comprises C₅₊ hydrocarbons. In the embodiment of FIG. 1, second product stream 132 is conducted from the second reaction zone 130. Here, a light hydrocarbon stream 136 separated from the second product stream 132 and conducted to electrical generator 170. Additionally or alternatively, a light hydrocarbon stream 137, optionally comprising gas phase products, is separated from the second product stream 132 and recycled back to second feed stream 131. Examples of gas phase products for recycling include CO, H₂, CH₄, CO₂, C₂H₄, C₃H₆, C₃H₈, C₃H₇OH and H₂O. The electrical generator 170 uses the light hydrocarbon stream to create electrical power 172 (e.g., through burning the light hydrocarbon stream to form steam, which in turn can drive a turbine), which is provided to electrolysis reactor 160. As the person of ordinary skill in the art will appreciate, the Fischer-Tropsch reaction produces water as a byproduct; as shown in FIG. 1, at least a portion of the water can be separated from the second product stream 132, which can be conducted via water stream 138 to electrolysis reactor 160. The electrolysis reactor electrolyzes water (here, separated from the crude methanol stream and/or the second product stream) to provide hydrogen gas using electrical power derived at least in part from the light hydrocarbon stream (although other sources of electrical power, including renewable sources, can be used).

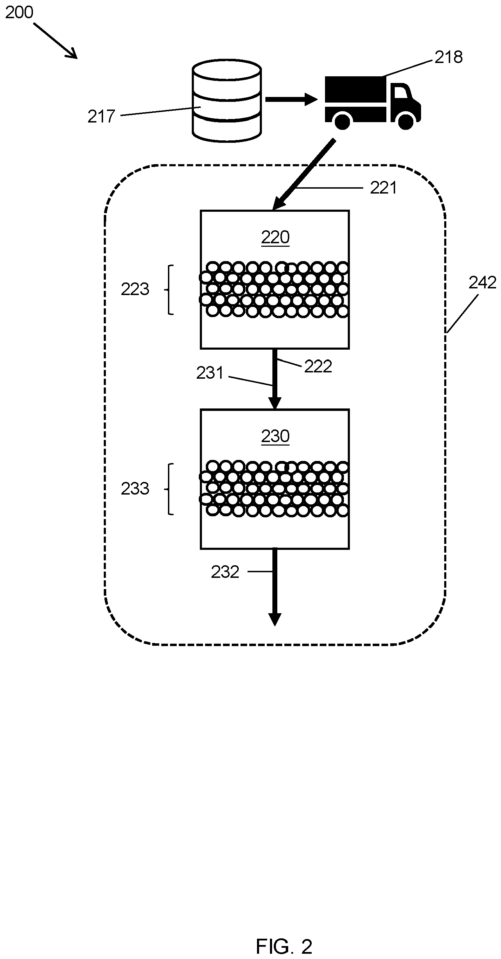

As noted above, methanol can be formed in a first plant, then transported (e.g., via vehicle or pipeline) to a second plant where the methanol is decomposed and the resulting carbon monoxide is used in a Fischer-Tropsch reaction to provide hydrocarbons. For example, in the embodiment of FIG. 2, methanol is loaded into storage tank 217, then transported to second plant 243, here, by truck 218. First feed stream 221 is conducted to methanol decomposition reaction zone 220, in which it is contacted with methanol decomposition catalyst 223 to generate first product stream 222 comprising CO and H₂. Here, at least a portion of first product stream 222 is provided to second feed stream 231. Second feed stream 231 is conducted to Fischer-Tropsch reaction zone 230, in which it is contacted with Fischer-Tropsch catalyst 233, resulting in second product stream 232 comprising C₅₊ hydrocarbons.

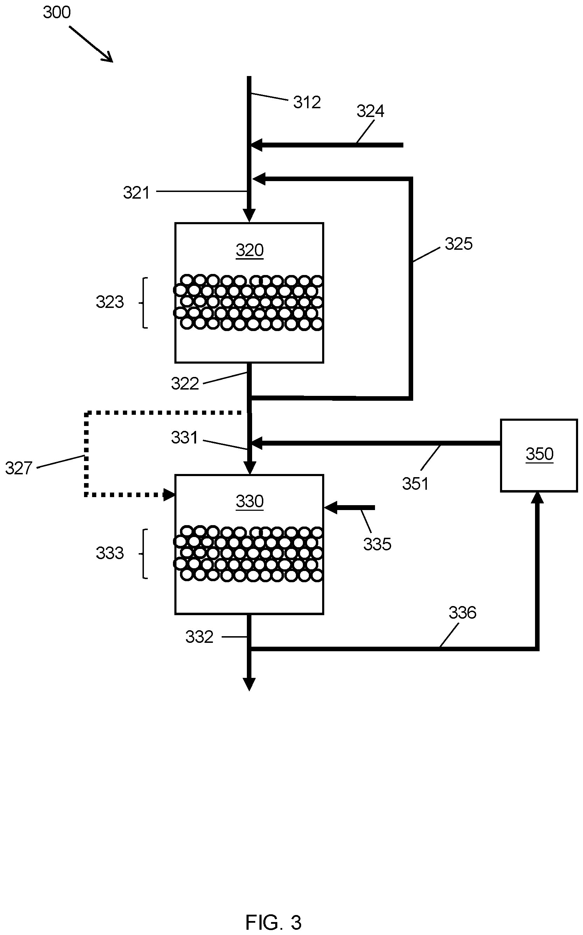

Another example embodiment is shown in schematic view in FIG. 3. Here, in process 300additional gas stream 324 is added to crude methanol stream 312 with optional dehydration, not shown, and the resulting mixture is provided as first feed stream 321. First feed stream 321 conducted to methanol decomposition reaction zone 320 in which with methanol decomposition catalyst 323 to provide first product stream 322. Here, first product stream 322 is conducted from the methanol decomposition reaction zone, and unreacted methanol is substantially separated from the first product stream (e.g., at least 50%, at least 75%, at least 90% or at least 95%) and is recycled to the first feed stream 321 via methanol recycle 325. At least a portion of H₂ of the first product stream 322 may also or alternatively be provided to the second reaction zone 330 to activate Fischer-Tropsch catalyst 333 through H₂ stream 327. The rest of first product stream 322 is provided as part of second feed stream 331, which is conducted into Fischer-Tropsch reaction zone 330. Also part of second feed stream 331 is additional gas stream 335, which provides additional H₂ and/or CO to the Fischer-Tropsch reaction zone through a separate inlet. The second feed stream is contacted with Fischer-Tropsch catalyst 333 in the Fischer-Tropsch reaction zone to provide a second product stream 332 that includes C₅₊ hydrocarbons. Second product stream 332 is conducted from the Fischer-Tropsch reaction zone, and a light hydrocarbon stream 336 is separated therefrom and conducted to partial oxidation unit 350. The partial oxidation unit, as the person of ordinary skill in the art would appreciate, oxidizes the light hydrocarbons to provide CO₂ and CO; at least a portion of CO generated from the partial oxidation unit 350 is included in the second feed stream 331 via CO stream 351.

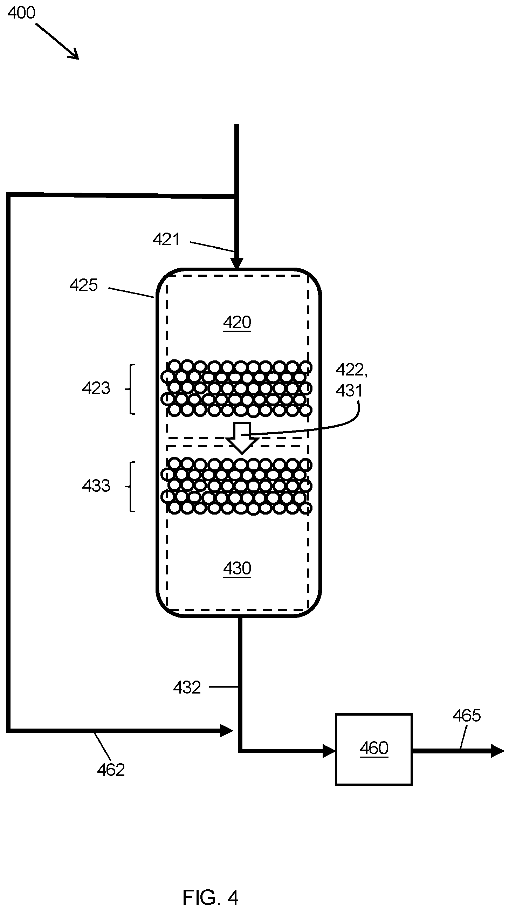

As noted above, various catalysts can be provided together in the same reactor. An example of one such embodiment is shown in schematic view in FIG. 4. Here, in process 400, first feed stream 421 is provided to stacked bed reactor 425, which includes a methanol decomposition reaction zone 420 (here, a first bed of the stacked-bed reactor that includes the methanol decomposition catalyst 423) and a Fischer-Tropsch reaction zone 430 (here, a second bed of the stacked-bed reactor that includes the Fischer-Tropsch catalyst 433). The first feed stream 421 is contacted with the methanol decomposition catalyst 423 to provide a first product stream 422 that includes CO and H₂. The first product stream is provided to the Fischer-Tropsch reaction zone as second feed stream 431, which is contacted with Fischer-Tropsch catalyst 433 to provide a second product stream 432 that includes C₅₊ hydrocarbons. Here, at least a portion of the C₅₊ hydrocarbons of the second product stream is conducted to hydroprocessing unit 460, where it is hydroprocessed to provide an end product stream 465. H₂ can also be provided to the hydrotreating unit in the portion of the second product stream that is conducted to the hydrotreating unit.

Various exemplary embodiments of the disclosure include, but are not limited to the enumerated embodiments listed below, which can be combined in any number and in any combination that is not technically or logically inconsistent.
Embodiment 1. A process for performing an integrated Fischer-Tropsch synthesis, the process comprising:
   providing a first feed stream comprising methanol;
   contacting the first feed stream with a methanol decomposition catalyst (e.g., in a methanol decomposition reaction zone) to decompose at least a portion of the methanol to form a first product stream comprising CO and H₂;
   providing a second feed stream comprising H₂ and at least a portion of the CO of the first product stream;
   contacting the second feed stream with a Fischer-Tropsch catalyst (e.g., in a Fischer-Tropsch reaction zone) to perform a Fischer-Tropsch synthesis to provide a second product stream comprising C₅₊ hydrocarbons.
Embodiment 2. The process according to embodiment 1, further comprising separating at least a portion of water from the first feed stream (e.g., at least 50%, at least 75%, or at least 90% of water in the first feed stream).
Embodiment 3. The process according to embodiment 1 or embodiment 2, wherein the the first feed stream has a water content of no more than 10 mol%, e.g., or no more than 2 mol%, or no more than 0.5 mol%.
Embodiment 4. The process according any of embodiments 1-3, wherein the first feed stream has a temperature in the range of 200-500 °C, e.g., 200-450 °C, or 200-400 °C, or 200-350 °C, or 200-300 °C, or 250-500 °C, or 250-450 °C, or 250-400 °C, or 250-300 °C, or 300-500 °C, or 300-450 C, or 300-400 °C.
Embodiment 5. The process according to any of embodiments 1-4, wherein the first feed stream comprises at least 5 mol% methanol, e.g., at least 7.5% methanol, or at least 10 mol% methanol, or at least 15% methanol, or at least 20% methanol, or at least 25 mol% methanol.
Embodiment 6. The process according to any of embodiments 1-5, wherein the first feed stream further comprises one or more of H₂, CO, CH₄, CO₂ and N₂.
Embodiment 7. The process according to any of embodiments 1-6, wherein the first feed stream has a concentration of water of no more than 5 mol%, e.g., no more than 2 mol% or no more than 1 mol%.
Embodiment 8. The process according to any of embodiments 1-7, wherein the first feed stream has a temperature in the range of 200-500 °C, e.g., 200-450 °C, or 200-400 °C, or 200-350 °C, or 200-300 °C, or 250-500 °C, or 250-450 °C, or 250-400 °C, or 250-300 °C, or 300-500 °C, or 300-450 °C, or 300-400 °C.
Embodiment 9. The process according to any of embodiments 1-8, wherein the methanol decomposition catalyst is a copper/zinc oxide catalyst, e.g., on alumina.
Embodiment 10. The process according to any of embodiments 1-9, wherein the contacting of the first feed stream with the methanol decomposition catalyst is performed at a temperature in the range of 200-500 °C, e.g., 200-450 °C, or 200-400 °C, or 200-350 °C, or 200-300 °C, or 250-500 °C, or 250-450 °C, or 250-400 °C, or 250-300 °C, or 300-500 °C, or 300-450 °C, or 300-400 °C.
Embodiment 11. The process according to any of embodiments 1-10, wherein the decomposition of methanol is performed with a carbon product selectivity of at least 50% for CO, e.g., at least 60%, or at least 70%, or at least 80%, or at least 90%.
Embodiment 12. The process according to any of embodiments 1-11, wherein the decomposition of methanol is performed with a selectivity of no more than 20% for CO₂, e.g., no more than 15%, no more than 10%, or no more than 5%.
Embodiment 13. The process according to any of embodiments 1-12, wherein the decomposition of methanol is performed with a conversion of methanol of at least 30%, e.g. at least 40%, or at least 50%, or at least 60%, or at least 65%, or at least 70%, or at least 75%.
Embodiment 14. The process according to any of embodiments 1-13, wherein the first product stream includes at least 20 mol% total of CO and H₂, e.g., at least 35 mol%, or at least 50 mol%, or at least 65 mol%.
Embodiment 15. The process according to any of embodiments 1-14, wherein the first product stream has a molar ratio of hydrogen to carbon monoxide in the range of 0.5:1 to 5:1, e.g., 1:1 to 3:1, 1.5:1 to 2.5:1.
Embodiment 16. The process according to any of embodiments 1-15, wherein the first product stream includes no more than 75 mol% methanol, e.g., no more than 60 mol% methanol, or no more than 50 mol% methanol, or no more than 25 mol% methanol.
Embodiment 17. The process according to any of embodiments 1-16, further comprising separating at least a portion of methanol from the first product stream (e.g., at least 50%, at least 75%, or at least 90% of methanol in the first product stream).
Embodiment 18. The process of embodiment 17, further comprising recycling to the first feed stream at least a portion of the methanol separated from the first product stream, e.g., at least 50%, or at least 75%, or at least 90%, or at least 95% of the methanol from the first product stream.
Embodiment 19. The process of any of embodiments 1-18, further comprising separating at least a portion of H₂ from the first product stream.
Embodiment 20. The process of any of embodiments 18 and 19, further comprising activating the Fischer Tropsch catalyst using at least a portion of the H₂ separated from the first product stream.
Embodiment 21. The process of any of embodiments 1-20, wherein at least 50% of CO of the first product stream is provided to the second feed stream, e.g., at least 75%, or at least 90%%, or at least 95%, or at least 99%.
Embodiment 22. The process of any of embodiments 1-21, wherein at least a portion of H₂ of the first product stream is provided to the second feed stream.
Embodiment 23. The process of any of embodiments 1-22, wherein at least 50% of H₂ of the first product stream is provided to the second feed stream, e.g., at least 75%, or at least 90%, or at least 95%, or at least 99%.
Embodiment 24. The process of any of embodiments 1-23, wherein H₂ is provided to the second feed stream from a hydrogen source other than the first product stream.
Embodiment 25. The process of any of embodiments 1-24, wherein CO is provided to the second feed stream from a CO source other than the first product stream.
Embodiment 26. The process of any of embodiments 1-25, wherein one or more of CO₂, CH₄ and N₂ is provided to the second feed stream from a source thereof otherthan the first product stream.
Embodiment 27. The process of any of embodiments 1-26, wherein the portion of the first product stream that is included in the second feed stream has a H₂:CO ratio in the range of 0.5:1 to 5:1, e.g., in the range of 1:1 to 2.5:1.
Embodiment 28. The process of any of embodiments 1-27, wherein the second feed stream has a molar H₂:CO ratio in the range of 0.5:1 to 5:1.
Embodiment 29. The process of any of embodiments 1-28, wherein the second feed stream has a molar H₂:CO ratio in the range of 1:1 to 2.5:1.
Embodiment 30. The process of any of embodiments 1-29, wherein the second feed stream has a molar H₂:CO ratio of at least 1.2:1, e.g., in the range of 1.2:1 - 2.5:1.
Embodiment 31. The process of any of embodiments 1-30, wherein the Fischer-Tropsch catalyst comprises cobalt, iron, rhodium, ruthenium, or a combination thereof.
Embodiment 32. The process of any of embodiments 1-31, wherein the Fischer-Tropsch catalyst comprises cobalt in an amount in the range of 5-25 wt%, calculated as Co(0).
Embodiment 33. The process of any of embodiments 1-31, wherein the Fischer-Tropsch catalyst comprises iron in an amount in the range of 25-95 wt%, calculated as Fe(0).
Embodiment 34. The process of any of embodiments 31-33, wherein the Fischer-Tropsch catalyst further comprises manganese.
Embodiment 35. The process of any of embodiments 31-34, wherein the Fischer-Tropsch catalyst is a supported catalyst, wherein the support comprises at least one of titanium oxide, zirconium oxide, cerium oxide, aluminum oxide, magnesium oxide, silicon oxide and zinc oxide.
Embodiment 36. The process of any of embodiments 31-35, wherein the Fischer-Tropsch catalyst is a supported catalyst, wherein the support comprises at least one of titanium oxide, aluminum oxide, and silicon oxide.
Embodiment 37. The process of any of embodiments 31-36, wherein the Fischer-Tropsch catalyst is a supported catalyst, wherein the support is a titanium dioxide su pport.
Embodiment 38. The process of any of embodiments 1-37, wherein the Fischer-Tropsch catalyst is activated in a reductive atmosphere.
Embodiment 39. The process of embodiment 38, wherein the reductive atmosphere comprises at least a portion of hydrogen from the first product stream.
Embodiment 40. The process of any of embodiments 1-39, wherein the contacting of the second feed stream with the Fischer-Tropsch catalyst is performed at a temperature in the range of 150-400°C (e.g., in the range of 150-350 °C, or 150-300 °C, or 150-250 °C, or 150-200 °C, or 200-400 °C, or 200-350 °C, or 200-300 °C, or 200-250 °C, or 250-400 °C, or 250-350 °C, or 250-300 °C, or 300-400 °C).
Embodiment 41. The process of any of embodiments 1-40, wherein the contacting of the second feed stream with the Fischer-Tropsch catalyst is performed at a temperature in the range of 200-350 °C.
Embodiment 42. The process of any of embodiments 1-41, wherein the contacting of the second feed stream with the Fischer-Tropsch catalyst is performed at a pressure in the range of 10-50 barg (e.g., 20-50 barg, or 25-50 barg, or 10-40 barg, or 20-40 barg, or 25-40 barg or 10-35 barg, or 20-35 barg, or 25-35 barg).
Embodiment 43. The process of any of embodiments 1-42, wherein the contacting of the second feed stream with the Fischer-Tropsch catalyst is performed at a pressure in the range of 20-40 barg.
Embodiment 44. The process of any of embodiments 1-43, wherein the contacting of second feed stream with the Fischer-Tropsch catalyst and the contacting of the first feed stream with the methanol decomposition catalyst are performed in the same plant.
Embodiment 45. The process of any of embodiments 1-44, wherein the contacting of the Fischer-Tropsch catalyst with the second feed stream is performed with a C₅₊ selectivity of at least 30%, e.g., at least 50%, or at least 70%.
Embodiment 46. The process of any of embodiments 1-45, wherein the C₅₊ hydrocarbons of the second product stream comprise C₅₊ oxygenates.
Embodiment 47. The process of any of embodiments 1-46, further comprising separating at least a portion of C₁-C₄ hydrocarbons from the second product stream to provide a light hydrocarbon stream.
Embodiment 48. The process of embodiment47, further comprising oxidizing at least a portion of the light hydrocarbon stream in a partial oxidation reactor to provide a pOX stream comprising CO and/or CO₂, and including at least a portion of the pOX stream in the second feed stream.
Embodiment 49. The process of embodiment47 or embodiment 48, further comprising including at least a portion of the light hydrocarbon stream in the second feed stream.
Embodiment 50. The process of any of embodiments 1-49, further comprising separating at least a portion of H₂ of the second product stream.
Embodiment 51. The process of embodiment 50, wherein at least a portion of the H₂ separated from the second product stream is recycled to the second feed stream.
Embodiment 52. The process of embodiment 50 or embodiment 51, wherein at least a portion of the H₂ separated from the second product stream is used to activate the Fischer-Tropsch catalyst.
Embodiment 53. The process of any of embodiments 1-52, further comprising separating at least a portion of CO of the second product stream.
Embodiment 54. The process of embodiment 53, wherein at least a portion of the CO separated from the second product stream is provided to the second feed stream.
Embodiment 55. The process of any of embodiments 1-54, further comprising providing from the second product stream a C₅₊ hydrocarbon product stream comprising at least 80 wt% C₅₊ hydrocarbons, e.g., at least 90 wt% C₅₊ hydrocarbons.
Embodiment 56. The process of any of embodiments 1-55, further comprising hydroprocessing at least a portion of the C₅₊ hydrocarbon second product stream by contacting the C₅₊ hydrocarbon product stream with hydrogen and a hydroprocessing catalyst.
Embodiment 57. The process of embodiment 56, wherein at least a portion of the hydrogen used in the hydroprocessing is provided from the first product stream or the second product stream.
Embodiment 58. The process of any of embodiments 1-57, wherein one or more products are provided from at least a portion of C₅₊ hydrocarbons of the second product stream, the one or more products being one or more of a fuel, a wax, or an oil.
Embodiment 59. The process of any of embodiments 1-58, wherein at least part of the H₂ of the second feed stream is from a renewable source.
Embodiment 60. The process of any of embodiment 1-59, wherein at least a portion of the hydrogen of the second feed stream is green hydrogen.
Embodiment 61. The process of any of embodiment 1-60, wherein at least a portion of the hydrogen of the second feed stream is blue hydrogen.
Embodiment 62. The process of any of embodiment 1-61, wherein at least a portion of the hydrogen of the second feed stream is grey hydrogen, black hydrogen, brown hydrogen, pink hydrogen, turquoise hydrogen, yellow hydrogen, and/or white hydrogen.
Embodiment 63. The process of any of embodiments 1-62, further comprising providing at least a portion of H₂ to the second feed stream by electrolysis of water.
Embodiment 64. The process of embodiment 63, wherein the electrolysis of water is performed using electricity at least partially derived from a renewable source.
Embodiment 65. The process of embodiment 63 or embodiment 64, wherein the electrolysis of water is performed using electricity at least partially generated from steam made by combustion of a light hydrocarbon stream provided from the second product stream.
Embodiment 66. The process of any of embodiments 63-65, further comprising the step of embodiment 48, wherein at least a portion of O₂ generated by the water electrolysis is provided to the partial oxidation reactor.
Embodiment 67. The process of any of embodiments 1-66, wherein the first reaction zone comprises a first reactor in which the methanol decomposition catalyst is disposed, and wherein the second reaction zone comprises a second reactor in which the Fischer-Tropsch catalyst is disposed.
Embodiment 68. The process of any of embodiments 1-67, wherein the first reaction zone comprises a first catalyst bed in which the methanol decomposition catalyst is disposed, and the second reaction zone comprises a second catalyst bed in which the Fischer-Tropsch catalyst is disposed.
Embodiment 69. The process of embodiment 68, wherein the first catalyst bed and the second catalyst bed are disposed within the same reactor in catalyst stacks or bed sections.
Embodiment 70. The process of any of embodiments 1-69, wherein the methanol decomposition catalyst and the Fischer-Tropsch synthesis catalyst have the same composition (e.g., are the same catalyst).

The particulars shown herein are by way of example and for purposes of illustrative discussion of various embodiments of the present disclosure only and are presented in the cause of providing what is believed to be the most useful and readily understood description of the principles and conceptual aspects of various embodiments of the disclosure. In this regard, no attempt is made to show details associated with the methods of the disclosure in more detail than is necessary for the fundamental understanding of the methods described herein, the description taken with the examples making apparent to those skilled in the art how the several forms of the methods of the disclosure may be embodied in practice. Thus, before the disclosed processes and devices are described, it is to be understood that the aspects described herein are not limited to specific embodiments, apparatus, or configurations, and as such can, of course, vary. It is also to be understood that the terminology used herein is for the purpose of describing particular aspects only and, unless specifically defined herein, is not intended to be limiting.

The terms "a," "an," "the" and similar referents used in the context of describing the methods of the disclosure (especially in the context of the following embodiments and claims) are to be construed to cover both the singular and the plural, unless otherwise indicated herein or clearly contradicted by context.

All methods described herein can be performed in any suitable order of steps unless otherwise indicated herein or otherwise clearly contradicted by context. The use of any and all examples, or exemplary language (e.g., "such as") provided herein is intended merely to better illuminate the methods of the disclosure and does not pose a limitation on the scope of the disclosure. No language in the specification should be construed as indicating any non-claimed element essential to the practice of the methods of the disclosure.

Unless the context clearly requires otherwise, throughout the description and the claims, the words 'comprise', 'comprising', and the like are to be construed in an inclusive sense as opposed to an exclusive or exhaustive sense; that is to say, in the sense of "including, but not limited to". Words using the singular or plural number also include the plural and singular number, respectively. Additionally, the words "herein," "above," and "below" and words of similar import, when used in this application, shall refer to this application as a whole and not to any particular portions of the application.

As will be understood by one of ordinary skill in the art, each embodiment disclosed herein can comprise, consist essentially of or consist of its particular stated element, step, ingredient or component. As used herein, the transition term "comprise" or "comprises" means includes, but is not limited to, and allows for the inclusion of unspecified elements, steps, ingredients, or components, even in major amounts. The transitional phrase "consisting of" excludes any element, step, ingredient or component not specified. The transition phrase "consisting essentially of" limits the scope of the embodiment to the specified elements, steps, ingredients or components and to those that do not materially affect the embodiment.

All percentages, ratios and proportions herein are by weight, unless otherwise specified.

Notwithstanding that the numerical ranges and parameters setting forth the broad scope of the disclosure are approximations, the numerical values set forth in the specific examples are reported as precisely as possible. Any numerical value, however, inherently contains various errors necessarily resulting from the standard deviation found in their respective testing measurements.

Groupings of alternative elements or embodiments of the disclosure are not to be construed as limitations. Each group member may be referred to and claimed individually or in any combination with other members of the group or other elements found herein. It is anticipated that one or more members of a group may be included in, or deleted from, a group for reasons of convenience and/or patentability. When any such inclusion or deletion occurs, the specification is deemed to contain the group as modified thus fulfilling the written description of all Markush groups used in the appended claims.

Some embodiments of various aspects of the disclosure are described herein, including the best mode known to the inventors for carrying out the methods described herein. Of course, variations on these described embodiments will become apparent to those of ordinary skill in the art upon reading the foregoing description. The skilled artisan will employ such variations as appropriate, and as such the methods of the disclosure can be practiced otherwise than specifically described herein. Accordingly, the scope of the disclosure includes all modifications and equivalents of the subject matter recited in the claims appended hereto as permitted by applicable law. Moreover, any combination of the above-described elements in all possible variations thereof is encompassed by the disclosure unless otherwise indicated herein or otherwise clearly contradicted by context.

The phrase "at least a portion" as used herein is used to signify that, at least, a fractional amount is required, up to the entire possible amount.

In closing, it is to be understood that the various embodiments herein are illustrative of the methods of the disclosures. Other modifications that may be employed are within the scope of the disclosure. Thus, by way of example, but not of limitation, alternative configurations of the methods may be utilized in accordance with the teachings herein. Accordingly, the methods of the present disclosure are not limited to that precisely as shown and described.

## Claims

1. A process for performing an integrated Fischer-Tropsch synthesis, the process comprising:
providing a first feed stream comprising methanol;
contacting the first feed stream with a methanol decomposition catalyst (e.g., in a methanol decomposition reaction zone) to decompose at least a portion of the methanol to form a first product stream comprising CO and H₂;
providing a second feed stream comprising H₂ and at least a portion of the CO of the first product stream;
contacting the second feed stream with a Fischer-Tropsch catalyst (e.g., in a Fischer-Tropsch reaction zone) to perform a Fischer-Tropsch synthesis to provide a second product stream comprising C₅₊ hydrocarbons.

2. The process according claim 1, wherein the first feed stream comprises at least 5 mol% methanol, e.g., at least 7.5% methanol, or at least 10 mol% methanol, or at least 15% methanol, or at least 20% methanol, or at least 25 mol% methanol.

3. The process according to claim 1 or claim 2, wherein the first feed stream has a concentration of water of no more than 5 mol%, e.g., no more than 2 mol% or no more than 1 mol%.

4. The process according to any of claims 1-3, wherein the decomposition of methanol is performed with a carbon product selectivity of at least 50% for CO, e.g., at least 60%, or at least 70%, or at least 80%, or at least 90%.

5. The process according to any of claims 1-4, wherein the first product stream includes at least 20 mol% total of CO and H₂, e.g., at least 35 mol%, or at least 50 mol%, or at least 65 mol%.

6. The process according to any of claims 1-5, wherein the first product stream has a molar ratio of hydrogen to carbon monoxide in the range of 0.5:1 to 5:1, e.g., 1:1 to 3:1, 1.5:1 to 2.5:1, or 1.5:1 to 3.5:1.

7. The process of any of claims 1-6, further comprising separating at least a portion of H₂ from the first product stream, and activating the Fischer Tropsch catalyst using at least a portion of the H₂ separated from the first product stream.

8. The process of any of claims 1-7, wherein at least 50% of H₂ of the first product stream is provided to the second feed stream, e.g., at least 75%, or at least 90%, or at least 95%, or at least 99%.

9. The process of any of claims 1-8, wherein the Fischer-Tropsch catalyst comprises cobalt in an amount in the range of 5-25 wt%, calculated as Co(0).

10. The process of any of claims 1-9, further comprising separating at least a portion of C₁-C₄ hydrocarbons from the second product stream to provide a light hydrocarbon stream.

11. The process of claim 10, further comprising oxidizing at least a portion of the light hydrocarbon stream in a partial oxidation reactor to provide a pOX stream comprising CO and/or CO₂, and including at least a portion of the pOX stream in the second feed stream.

12. The process of claim 9 or claim 10, further comprising including at least a portion of the light hydrocarbon stream in the second feed stream.

13. The process of any of claims 1-12, further comprising hydroprocessing at least a portion of the C₅₊ hydrocarbon second product stream by contacting the C₅₊ hydrocarbon product stream with hydrogen and a hydroprocessing catalyst.

14. The process of claim 13, wherein at least a portion of the hydrogen used in the hydroprocessing is provided from the first product stream or the second product stream.

15. The process of any of claims 1-14, wherein the methanol decomposition catalyst and the Fischer-Tropsch synthesis catalyst have the same composition (e.g., are the same catalyst).
